(19) Europäisches Patentamt
European Patent Office
Office européen des brevets

(11) **EP 2 590 042 B1**

(12) **EUROPEAN PATENT SPECIFICATION**

(45) Date of publication and mention
of the grant of the patent:
**10.09.2014 Bulletin 2014/37**

(51) Int Cl.:
***G05D 1/02*** *(2006.01)*      ***B25J 9/16*** *(2006.01)*
***B62D 57/02*** *(2006.01)*

(21) Application number: **12191057.4**

(22) Date of filing: **02.11.2012**

(54) **Walking robot performing position recognition using several local filters and a fusion filter**

Gehroboter mit Positionsbestimmung mittels mehrerer lokaler Filter und eines Fusionfilters

Robot mobile pour la détection d' une position utilisant plusieurs filtres locaux et un filtre fusion

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2011 KR 20110114730**

(43) Date of publication of application:
**08.05.2013 Bulletin 2013/19**

(73) Proprietor: **Samsung Electronics Co., Ltd Gyeonggi-do 443-742 (KR)**

(72) Inventors:
• **Ahn, Sung Hwan**
  **Gyeonggi-do (KR)**
• **Roh, Kyung Shik**
  **Gyeonggi-do (KR)**
• **Yoon, Suk June**
  **Seoul (KR)**
• **Hyung, Seung Yong**
  **Gyeonggi-do (KR)**

(74) Representative: **Taor, Simon Edward William et al Venner Shipley LLP 200 Aldersgate London EC1A 4HD (GB)**

(56) References cited:
**EP-A1- 1 978 432**      **US-A- 6 047 226**
**US-A1- 2006 129 276**

**Description**

The following description relates to a walking robot configured to detect the position thereof by integrating information received from a plurality of sensors mounted to the mobile apparatus.

In general, position recognition is a technology providing a mobile apparatus with autonomous space perception, and such technology is considered a core in implementing an autonomous mobile function of a mobile apparatus or an Augmented Reality (AR). Here, the mobile apparatus includes a mobile robot, such as a robot cleaner or a walking robot, for example, or a mobile device, such as a mobile phone, for example. The mobile robot is capable of independently moving around without control by a human being, while provided with a sensor that corresponds to human eyes and has a determination function. The mobile device is not provided with an autonomous mobile function, but has a small size, which allows the mobile device to be operated while held in a hand in such a way as to be carried and operated by a human being while on the move.

Most of the position recognition technology has made advancement in a field of a mobile robot having wheels. The technology as such is provided with a single filter structure that uses a Kalman Filter or a Particle Filter as a core algorithm, and is implemented through a method called a Simultaneous Localization and Mapping (SLAM). The position of a mobile robot is estimated by repeatedly performing prediction and update stages. In the prediction stage, the position of the next stage of a robot is predicted by using a Motion Model of the robot, and in the update stage, the position information of the mobile robot, which is predicted, is updated by receiving information from a sensor.

The research on the position recognition technology has been performed mainly on sensor fusion, in which an image sensor, such as a camera, or a distance sensor, such as a laser sensor or an ultrasonic wave sensor, is mounted on the body of a robot, and the information obtained from each of the sensors is simultaneously processed. A robot simultaneously estimates the position information thereof and position information of a landmark by using a feature point, which is extracted from the image information obtained from a camera, or a corner, a wall, and a grid map, which are obtained from the distance information detected through the laser sensor information as a natural landmark.

In general, when implementing position recognition through a multi-sensor fusion, if the number of the sensors is increased, the accuracy in estimating a position is improved. However, for a conventional position recognition technology having a single filter structure, if the number of the sensors thereof is increased, the structure and implementation of a filter become complicated, and the information calculated is concentrated on a single filter, and thus the load in processing information by the filter is increased. In particular, in the update stage, the amount of the measured information is increased in proportion to the number of the sensors mounted thereto, the amount of calculation of the filter thereof is increased, and the operation speed thereof is reduced.

In addition, in a single filter structure, preventing filter malfunctions or entry of erroneous filter information is difficult, and thus the filter may become vulnerable to a disturbance. As a result, the estimation result of the position of a robot is easily invalid. In general, once an estimate value of the filter is invalid, it may be difficult to recover the filter to the original function thereof. When performing position recognition of a robot by using image information, the recovery of the original function of the filter may be possible by implementing an additional technology called Kidnap Recovery, but the calculation and the implementation processes are complicated.

Therefore, it is an aspect of the present disclosure to provide a walking robot capable of enhancing performance in position recognition (accuracy and convergence in position recognition) of the walking robot by performing the position recognition through a distributed filter system, which includes a plurality of local filters, each independently operating, and a single fusion filter that integrates the position recognition result performed by each of the plurality of local filters. Additional aspects of the disclosure will be set forth in part in the description which follows and, in part, will be obvious from the description, or may be learned by practice of the disclosure.

European patent application EP 1978432 discloses a routing apparatus for autonomous mobile unit which includes a sensor unit and an electronic control unit which controls movements of the autonomous mobile unit.

United States patent application US 2006/129276 discloses an autonomous mobile robot including a moving mechanism, an autonomous movement controller, a self-location recognition unit, and an infrared device.

United States patent US 6,047,226 discloses a stellar attitude determination system which includes attitude sensors, a control processor, and attitude control actuators

According to an aspect of the present disclosure, there is provided a walking robot as set out in claim 1. Preferred features of this aspect are set out in claims 2 to 8.

According to the walking robot of the present disclosure, the performance in position recognition (accuracy and convergence in position recognition) of the walking robot is enhanced by performing the position recognition through a distributed filter system, which includes a plurality of local filters each independently operating and a single fusion filter that integrates the position recognition result performed by each of the plurality of local filters.

In addition, with the walking robot of the present disclosure, the position recognition through multi-sensor fusion is implemented through the distributed filter system, so the speed of position recognition of the walking robot, that is, the operating speed of the filter, may be enhanced when compared to the case of the multi-sensor fusion performed by using a single filter system.

These and/or other aspects of the disclosure will become apparent and more readily appreciated from the following description of the embodiments, taken in conjunction with the accompanying drawings of which:

FIG. 1 is a drawing showing an exterior of a walking robot, in accordance with an embodiment of the present disclosure.
FIG. 2 is a drawing showing a configuration of a main mechanism and joint of a walking robot, in accordance with an embodiment of the present disclosure.
FIG. 3 is a control block diagram of a walking robot, in accordance with an embodiment of the present disclosure.
FIG. 4 is a drawing showing a configuration of a position recognition unit illustrated on FIG. 3.
FIG. 5 is a flow chart illustrating a position recognition method of a walking robot using a first local filter illustrated on FIG. 4.
FIG. 6 is a flow chart illustrating a position recognition method of a walking robot using a second local filter illustrated on FIG. 4.
FIG. 7 is a flow chart illustrating a position recognition method of a walking robot using a third local filter illustrated on FIG. 4.
FIG. 8 is a flow chart illustrating a position recognition method of a walking robot using a fourth local filter illustrated on FIG. 4.
FIG. 9 is a flow chart illustrating a position recognition method of a walking robot using a fusion filter illustrated on FIG. 4.
FIG. 10 is a flow chart illustrating a position recognition method of a walking robot in accordance with an embodiment of the present disclosure.

Reference will now be made in detail to the embodiments of the present disclosure, examples of which are illustrated in the accompanying drawings, wherein like reference numerals refer to like elements throughout.

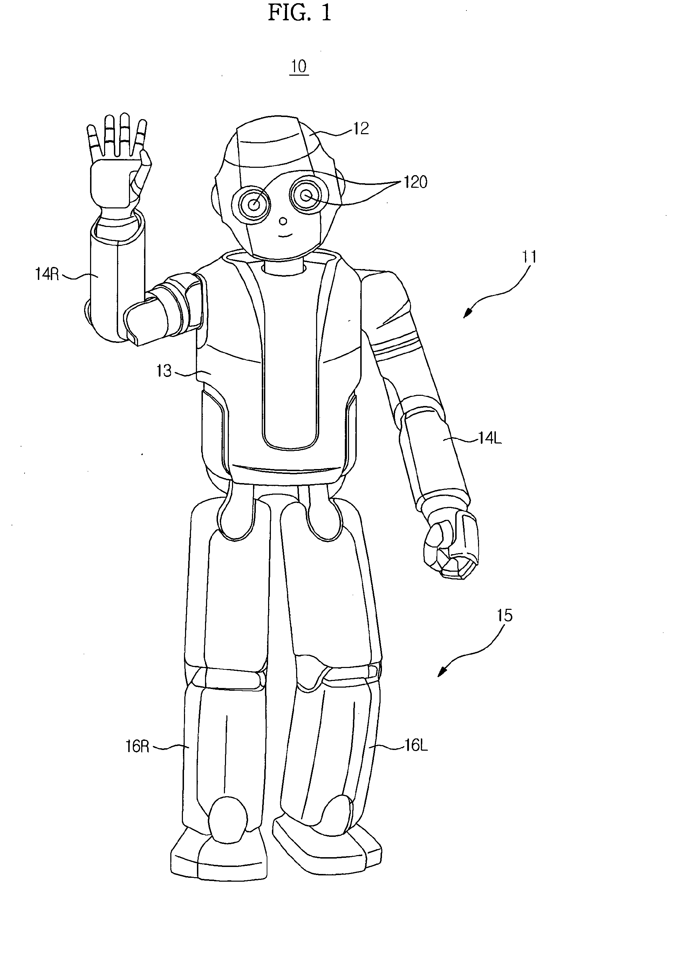

FIG. 1 is a drawing illustrating an exterior of a walking robot, an example of a mobile apparatus, in accordance with an embodiment of the present disclosure.

As illustrated on FIG. 1, a walking robot 10, an example of a mobile apparatus in accordance with the present disclosure, is a biped walking robot that moves while standing erect by two legs 16L and 16R similar to legs of a human being, and includes an upper body 11 having a head 12, a torso 13, and two arms 14L and 14R, and a lower body 15 having the two legs 16L and 16R. A mechanism unit having a shape of the eyes of a human being on the head 12 is provided with a camera 12O mounted thereto to photograph the surroundings of a moving space.

With reference to the labels, the letter 'L' and 'R' that are followed after the numbers represent the left and right of the walking robot 10, respectively.

In the embodiment of the present disclosure, a biped walking robot is described as an example of a mobile apparatus. However, the present disclosure may be applied to various mobile robots, such as a cleaning robot in a household setting, a service robot in public spaces, a carrier robot in production facilities, or an assistant robot, for example.

Furthermore, the present disclosure may be applied to a mobile apparatus not provided with an autonomous mobile function but configured to be operated while portably carried or held in a hand of a human being, such as a mobile phone, for example.

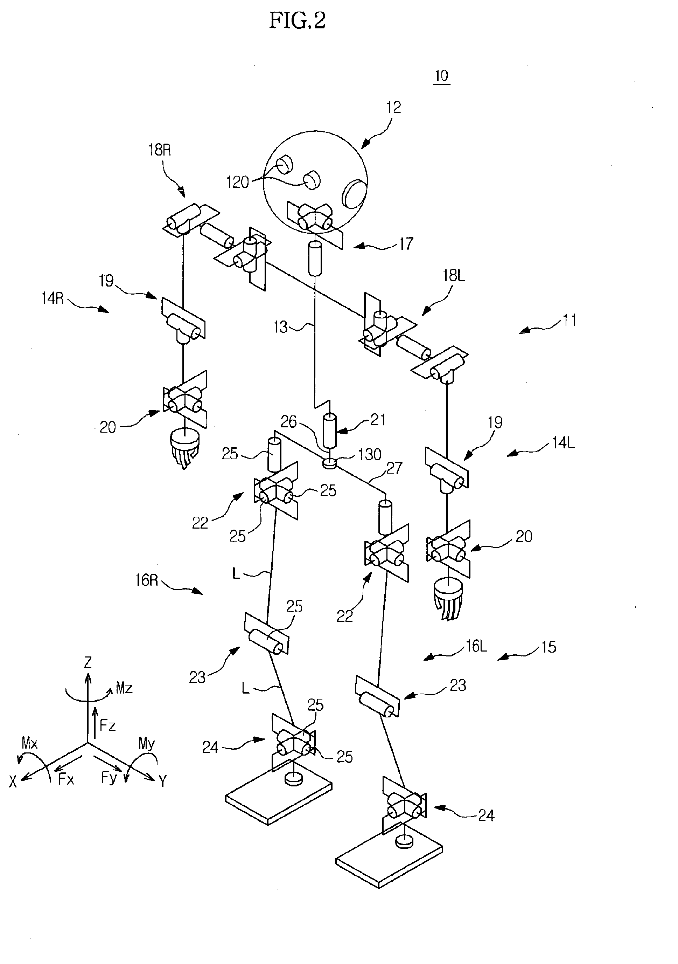

FIG. 2 is a drawing showing a configuration of a main mechanism and joint of a walking robot, an example of a mobile apparatus, in accordance with an embodiment of the present disclosure.

As illustrated on FIG. 2, the head 12 of the walking robot 10 is provided with the camera 120 mounted thereto to photograph the surroundings of the moving space.

The head 12 is connected to the torso 13 of the upper body 11 through a neck joint unit 17. The torso 13, the two arms 14L and 14R, and the two legs 16L and 16R are provided with a plurality of joint units such as a shoulder joint unit 18, an elbow joint unit 19, a wrist joint unit 20, a waist joint unit 21, a hip joint unit 22, a knee joint unit 23, and an ankle joint unit 24 installed thereto. Each of the plurality of joint units 18, 19, 20, 21, 22, 23, and 24 is provided with one to three rotating joints 25 included therein, depending on the degree of freedom, that is, the number of axes that a joint moves around. As an example, the hip joint unit 22 is provided thereto with three degrees of freedom, having the rotating joint 25 in a yaw direction (rotation of a z axis), the rotating joint 25 in a pitch direction (rotation of a y axis), and the rotating joint 25 in a roll direction (rotation of a x axis). Each of the joint units 18, 19, 20, 21, 22, 23, and 24 is connected by a link L (a structure illustrated as a straight line on FIG. 2).

The waist joint unit 21 installed at a lower portion of the upper body 11, and is provided with a pelvis 26 connected thereto to support the upper body 11. The pelvis 26 is connected to the hip joint unit 22 through a pelvis link 27. The pelvis link 27 is provided with an inertia sensor 130, that is, an Inertial Measurement Unit (IMU) installed thereto, to detect the posture information (the angle information) of the walking robot 10. The inertia sensor 130 is configured to generate the posture information (the angle information) of the roll direction, the pitch direction, and the yaw direction by detecting the relative angle of the pelvis link 27 with respect to the direction of gravity and an inertial frame. The inertia sensor 130 may be installed on the torso 13 or head 12 rather than the pelvis link 27.

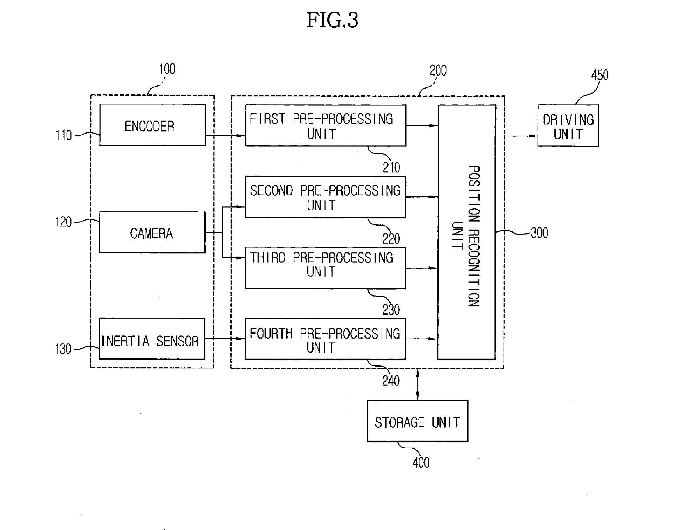

Although not illustrated on FIG. 2, each of the joint units 18,19, 20, 21, 22, 23, and 24 of the walking robot 10 is provided with an actuator, which corresponds to a driving unit on FIG. 3, such as a motor, driving each of the rotating joints 25 by a driving force (electricity or oil pressure), and with an encoder 110 (FIG. 3) installed to detect the rotating angle of each actuator, that is, the rotating angle of each of the rotating joints 25. A control unit 300 (FIG. 3), which is configured to control the overall movement of the walking robot 10, properly controls the actuators as such, so that various movements of the walking robot 10 may be implemented.

FIG. 3 is a controlled block diagram of a walking robot, an example of a mobile apparatus, in accordance with an embodiment of the present disclosure.

As illustrated on FIG. 3, the walking robot 10, an example of a mobile apparatus in accordance with an embodiment of the present disclosure, includes a sensor module 100, a control unit 200, a storage unit 400, and a driving unit 450.

The sensor module 100 includes a plurality of sensors to detect the information on the walking robot 10 and the moving space of the walking robot 10. The sensor module 100 may include various sensors, such as the encoder 110 to obtain the rotating angle information of the rotating joint that is related to a walking of the walking robot 10, the camera 120 to photograph the surroundings of the moving space on which the walking robot 10 walks, and the inertia sensor 130 to detect the posture information (the angle information) of the walking robot 10.

The encoder 110 detects the rotating angle of each actuator (the driving unit) installed to rotatively drive each rotating joint 25 provided at the hip joint unit 22, the knee joint unit 23, and the ankle joint unit 24.

The camera 120 detects the light reflected from an apparatus, and converts the light to a digital signal, thereby obtaining the image information of the surroundings of the moving space. As for the camera 120, a CCD (Charge-Coupled Device) camera, a CMOS (Complementary Metal Oxide Semiconductor) camera, or a TOF (Time of Flight) camera may be used, and other than the cameras as such, other apparatuses that are capable of obtaining the image information on the apparatus positioned on the path of the walking robot 10 may be used as a camera.

The inertia sensor 130 is configured to measure various navigation information, such as the acceleration, speed, and/or direction (angle) of the walking robot 10, and detect the slope and rotating angle of the roll direction, pitch direction, and/or yaw direction of the pelvis link 27. The inertia sensor 130 includes a tilt sensor (not shown) to measure the angle of the walking robot 10, and an angular velocity sensor (not shown) to measure the angular velocity of the walking robot 10. Here, for the slope sensor, an accelerometer (not shown) is used, and for the accelerometer, a rate-gyroscope (not shown) is used.

The control unit 200 is a controller configured to control the overall movement of the walking robot 10, and includes a first pre-processing unit 210, a second pre-processing unit 220, a third pre-processing unit 230, a fourth pre-processing unit 240, and a position recognition unit 300.

The first pre-processing unit 210, the second pre-processing unit 220, the third pre-processing unit 230, and the fourth pre-processing unit 240 perform the pre-processing, with respect to the detection information, such as the rotating angle information, image information, and inertia detection information that are delivered from the encoder 110, the camera 120, and the inertia sensor 130, to calculate information needed for the position recognition (hereinafter called measured information) of the walking robot 10, and transmits the calculated measured information to the position recognition unit 300.

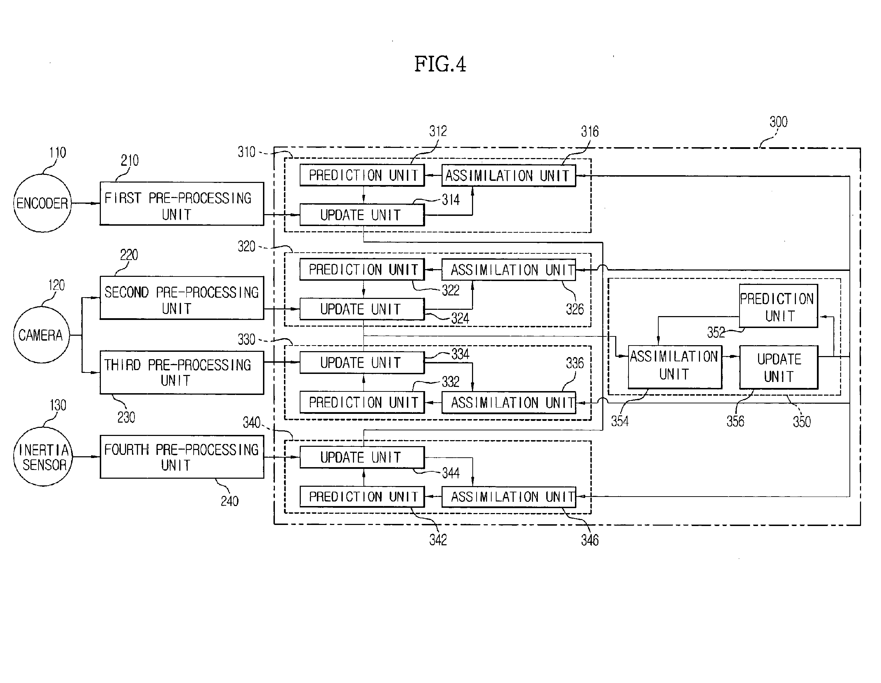

The position recognition unit 300, by using various types of information delivered from the first pre-processing unit 210, the second pre-processing unit 220, the third pre-processing unit 230, and the fourth pre-processing unit 240, estimates the position and the posture of the walking robot 10. The configuration of the position recognition unit 300 will be described in detail by referring to FIG. 4.

The storage unit 400 is a memory configured to store predetermined information, which is needed to perform the position recognition of the walking robot 10 and an execution result of the position recognition. The storage unit 400 stores the mechanism information (length information) of the link (the mechanism structure connecting the joint units), the result of the position recognition (the position information of the landmark and the position/posture information of the walking robot) of the walking robot 10 that is calculated by using a plurality of algorithms (a plurality of filters) in the process of the walking of the walking robot 10, and a map related to the moving space (the working space) built by using a plurality of algorithms, particularly a Simultaneous Localization and Mapping (SLAM) algorithm.

In the embodiment of the present disclosure, the walking robot 10 is described as being configured to additionally have the storage unit 400 to store the predetermined information needed to perform the position recognition and the execution result of the position recognition, but the configuration of the walking robot 10 is not limited thereto. The walking robot 10 may be provided with an internal memory of the control unit 200 to store the predetermined information needed for position recognition without adopting the storage unit 400.

The driving unit 450 is an actuator, such as a motor, configured to deliver a driving force, that is by an electricity or an oil pressure, to each of the rotating joints 25 that forms each of the joint units 18,19, 20, 21, 22, 23, and 24.The driving unit 450, according to the control signal delivered from the control unit 200, rotatively drives each of the rotating joints 25 of each of the joint units 18,19, 20, 21, 22, 23, and 24. Hereinafter, referring to FIG. 4, the configuration of the position recognition unit 300 illustrated on FIG. 3 will be described in detail.

As illustrated on FIG. 4, the position recognition unit 300 has a structure of a distributed filter system including a plurality of filters 310 to 350.

Here, the reference numerals of the position recognition unit 300 will be applied to the distributed filter system in the following description. In the embodiment of the present disclosure, the distributed filter system 300, as illustrated on FIG. 4, includes the first to the fourth local filters 310 to 340 and the single fusion filter 350. Each of the filters 310, 320, 330, 340, and 350 is independently operated, and when the position recognition of the walking robot 10 is performed, the result of the position recognition may be obtained from each of the filters 310, 320, 330, 340, and 350. All the filters 310, 320, 330, 340, and 350 are composed with a similar configuration of components that includes prediction units 312, 322, 332, 342, and 352, update units 314, 324, 334, 344, and 354, and assimilation units 316, 326, 336, 346, and 356. All the filters 310, 320,330, 340, and 350 repeatedly perform a prediction stage, an update stage, and an assimilation stage until the movement of the walking robot 10 is being stopped.

Each of the prediction units 312, 322, 332, 342, and 352 of each of the filters 310,320, 330,340, and 350 performs the prediction stage that predicts new position/posture information of the walking robot 10 from recognized position/posture information of the walking robot 10. The recognized position/posture information is estimated, or recognized, in the update stage prior to the prediction stage.

Each of the update units 314,324,334, and 344 of each of the local filters 310, 320, 330, and 340 updates the position/posture information of the walking robot 10 that is predicted in the prediction stage, by using the detection information of each of the sensors 110, 120, and 130. In addition, the assimilation update unit 356 of the fusion filter 350 integrates the result of the position recognition (the updated position/posture information) of the walking robot 10 that is delivered from each of the update units 314, 324, 334, and 344 of each of the local filters 310, 320, 330, and 340, and updates the position/posture information of the walking robot, which is predicted in the prediction state, by using the integrated information.

Each of the assimilation units 316, 326, 336, and 346 of each of the local filters 310, 320, 330, and 340 reflects the result of the position recognition (the updated position/posture information) of the walking robot 10, which is delivered from the update unit 356 of the fusion filter 350, into the position/posture information of the walking robot 10 that is updated in the update stage. In addition, the assimilation unit 354 of the fusion filter 350 integrates the result of the position recognition (the updated position/posture information) of the walking robot 10, which is delivered from each of the update units 314,324,334, and 344 of each of the local filters 310, 320, 330, and 340, to the position/posture information of the walking robot 10 that is predicted in the prediction stage.

That is, each of the local filters 310, 320, 330, and 340 delivers the position/posture information of the walking robot 10 that is updated by using the detection information of each of the sensors 110, 120, and 130, and the fusion filter 350 integrates/updates the delivered position/posture information of the walking robot 10, and delivers the integrated/updated information to each of the local filters 310, 320, 330, and 340.

Hereinafter, the common movement process of each of the local filters 310, 320, 330, and 340 will be described. In the embodiment of the present disclosure, a Kalman Filter is used as an example of the operating filter of each of the local filters 310,320, 330, and 340.

Each of the local filters 310, 320, 330, and 340 is structurally independent of the fusion filter 350, and forms various modules according to the sensors 110, 120, and 130 being used and the processing scheme of the information detected through the sensors 110, 120, and 130. Each of the local filters 310, 320, 330, and 340, has state variables $(xL(k|k))$ to estimate the position/posture information of the walking robot 10, a three-dimensional position (r), a three-dimensional posture (quaternion, q), a three-dimensional linear speed (v) with respect to a world coordinate, and a three-dimensional angular velocity (w) with respect to a body coordinate.

In the prediction stage of each of the local filters 310, 320, 330, and 340, the state variable is modelled according to Equation 1 below, prior to being used with the measured sensor information in the update stage by using a constant velocity model based on the estimated state variable.

[Equation 1]

$$\mathbf{x}_L(k|k-1) = \begin{bmatrix} \mathbf{r}(k|k-1) \\ \mathbf{q}(k|k-1) \\ \mathbf{v}(k|k-1) \\ \omega(k|k-1) \end{bmatrix} = \begin{bmatrix} \mathbf{r}(k-1|k-1) + [\mathbf{v}(k-1|k-1) + \mathbf{n}_v(k)]\Delta t \\ \mathbf{q}(k-1|k-1) \times \mathbf{q}([\omega(k-1|k-1) + \mathbf{n}_\omega(k)]\Delta t) \\ \mathbf{v}(k-1|k-1) + \mathbf{n}_v(k) \\ \omega(k-1|k-1) + \mathbf{n}_\omega(k) \end{bmatrix}$$

Here, $n_v$ and $n_w$ are defined as noise components of the speed and the angular velocity, respectively.

In the update stage of each of the local filters 310, 320, 330, and 340, a Kalman Filter Update is performed by using the measured information z(k), which is obtained through the pre-processing of the detection information of each of the sensors 110, 120, and 130, and a predicted measurement value H(k), which is calculated by use of the state variable ($x_L$(k|k)) obtained from the prediction stage. After the update on the predicted position/posture information of the walking robot 10 is completed, information is delivered to the fusion filter 350 in the form of an input with respect to an information filter as shown in Equation 2 and Equation 3 below.

[Equation 2]

$$\mathbf{i}(k) = \mathbf{H}^T(k)\mathbf{R}^{-1}(k)\mathbf{z}(k)$$

[Equation 3]

$$\mathbf{I}(k) = \mathbf{H}^T(k)\mathbf{R}^{-1}(k)\mathbf{H}(k)$$

Here, H(k) is referred to as the Jacobian matrix of the predicted measurement information H(k), and R(k) is defined as the covariance matrix configured to express the uncertainty of the measured information z(k).

Each time the detection information is input from each of the sensors 110, 120, and 130, the prediction and the update stages are performed in a repeated manner. When the result of the position recognition (the updated position/posture information of the walking robot) from the fusion filter 350 is input, the assimilation stage is performed, in which the result of the position recognition from the fusion filter 350 is reflected into the position/posture of the walking robot 10, which is updated in the update stage of each of the local filters 310, 320, 330, and 340. The assimilation stage is performed using the Kalman Filter Update that is similar to the update stage, so that each of the local filters 310, 320, 330, and 340 is supplied with information from other sensors, thereby enhancing the accuracy in estimation of the position of the filter system 300 as a whole.

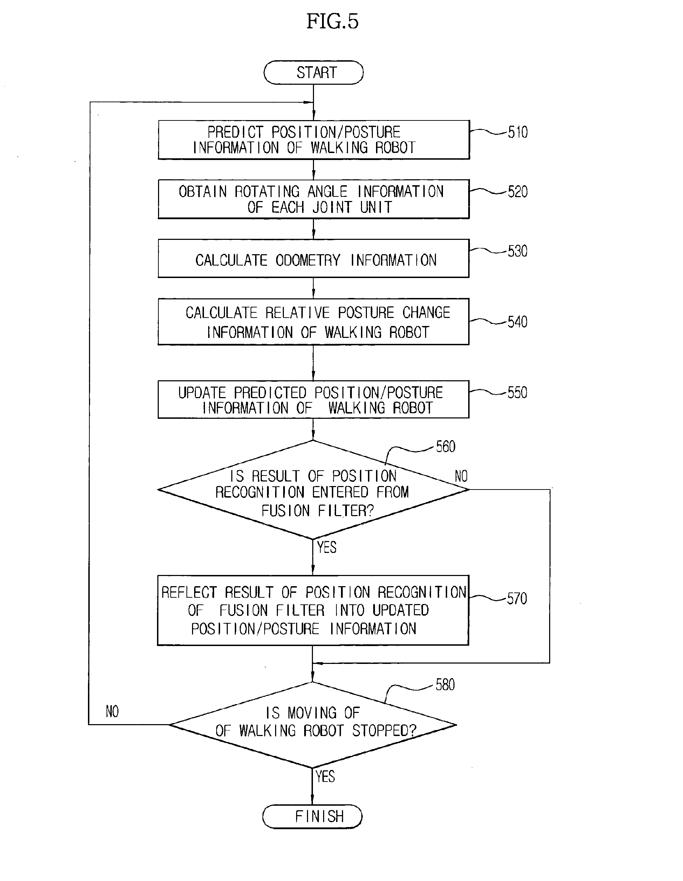

Hereinafter, referring to FIGS. 5 to 8, the process of recognizing the position of the walking robot 10 by using each of the local filters 310, 320, 330, and 340 will be described.

FIG. 5 is a flow chart illustrating a position recognition method of the walking robot 10 by using the first local filter 310 illustrated on FIG. 4.

The first local filter 310 uses the encoder 110 as the sensor configured to perform the position recognition of the walking robot 10, and updates the position/posture information of the walking robot 10 by using the odometry information of the walking robot 10. For the convenience of description, the first local filter 310 is defined as the odometry filter.

As an initial condition to describe the operation of an embodiment of the present disclosure, the storage unit 400 is assumed to store the mechanism information (the length information) of the link (the mechanism structure connecting the joint units) of the walking robot 10 as predetermined information used by the walking robot 10 to perform the position recognition. In addition, with respect to the temporal order, a prior stage will be marked as 'k-1', and a next stage of the prior stage (the present stage) will be marked as 'k'.

As illustrated on FIG. 5, the prediction unit 312 of the first local filter 310 is configured to predict the position/posture information of the next stage 'k' of the walking robot 10 from new position/posture information of the walking robot 10, which is obtained by reflecting the result of the position recognition of the fusion filter 350 into the position/posture information of the walking robot 10 that is estimated (recognized) in the prior update stage 'k-1' (510). The process as such is categorized as the prediction stage of the position recognition algorithm.

Next, the first pre-processing unit 210 obtains the rotating angle information of the rotating joint, which composes the joint unit that is related to the walking motion of the walking robot 10, from the encoder 110 (520).

Then, the first pre-processing unit 210 calculates odometry information by using the mechanism information of each of the links and the rotating angle information (530). The odometry information represents the position (coordinate) information and the posture (angle) information of the walking robot 10 with respect to an origin point. The origin point is a point on a coordinate system from which the walking robot starts the walking motion. The odometry information is calculated in an accumulating manner by using dead reckoning.

Next, the first pre-pressing unit 210, using the odometry information of the 'k' stage and the 'k-1' stage, calculates the relative posture change information of the walking robot 10 (540). The calculated relative posture change information of the walking robot 10 is the measured information z(k), which is previously described.

The predicted measurement information h(k) at the odometry filter 310 may be expressed in Equation 4 below.

[Equation 4]

$$\mathbf{h}^{odo}(k) = h_3(\mathbf{r}(k|k-1), \mathbf{q}(k|k-1), \mathbf{r}(k-1|k-1), \mathbf{q}(k-1|k-1))$$

Thus, the update unit 314 enters the calculated relative posture change information of the walking robot 10 as the z(k) of Equation 2, which is previously described, calculates a Jacobian matrix of Equation 4, and then enters the calculated result as the H(k) of Equation 2 and Equation 3, thereby updating the position/posture information of the walking robot 10 that is predicted in the prediction stage (550). The process as such is categorized as the update stage of the position recognition algorithm. The update unit 314 transmits the updated position/posture information of the walking robot 10 to the assimilation unit 316.

Then, the assimilation unit 316 determines whether the result of the position recognition (the updated position/posture information) of the walking robot 10 has been received from the update unit 356 of the fusion filter 350 (560). When the result of the position recognition of the walking robot 10 is received from the update unit 356 of the fusion filter 350 ('Yes' at operation 560), the assimilation unit 316 reflects the result of the position recognition of the fusion filter 350 into the position/posture information of the walking robot 10 that is updated in the update stage, and transmits the position/posture information of the walking robot 10, which is provided with the result of the position recognition of the fusion filter 350 reflected thereinto, to the prediction unit 312 (570). The process as such is categorized as the assimilation stage of the position recognition algorithm.

Meanwhile, when the result of the position recognition of the walking robot 10 is not entered from the update unit 356 of the fusion filter 350 ('No' at operation 560), the assimilation unit 316 proceeds to operation 580 without performing the assimilation stage.

Next, the control unit 200 determines whether the moving of the walking robot 10 is stopped (580). The control unit 200 determines that the moving of the walking robot 10 is stopped if a Stop Walking Command' of the walking robot 10 is entered through an input unit (not shown) by a user, or if no further rotating angle information is received from the encoder 110.

If it is determined that the moving of the walking robot 10 is not stopped ('No' at operation 580), the control unit 200 returns to the operation 510, and continuously controls the walking robot 10 to perform the position recognition. If it is determined that the moving of the walking robot 10 is stopped ('Yes' at operation 580), the control unit 200 completes the position recognition of the walking robot 10.

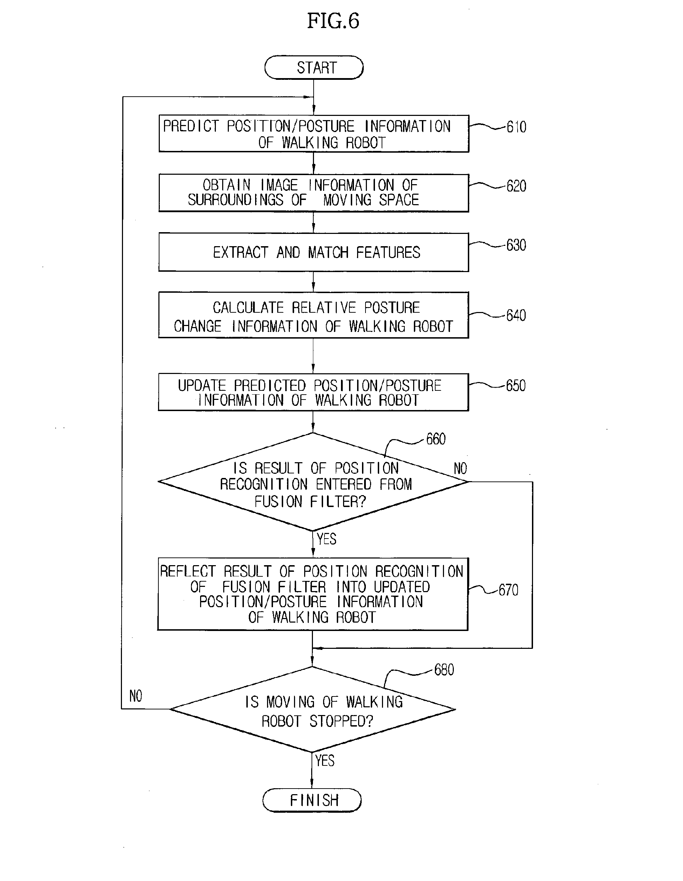

FIG. 6 is a flow chart illustrating a position recognition method of the walking robot 10 by using the second local filter 320 illustrated on FIG. 4.

The second local filter 320 uses the camera 120 as the sensor configured to perform the position recognition of the walking robot 10, and by using the relative posture change information of the walking robot 10, updates the predicted position/posture information of the walking robot 10. For the convenience of description, the second local filter 320 is defined as a visual sensor odometry filter.

As illustrated in FIG. 6, the prediction unit 322 of the second local filter 320 is configured to predict the position/posture information of the next stage 'k' of the walking robot 10 from new position/posture information of the walking robot 10, which is obtained by reflecting the result of the position recognition of the fusion filter 350 into the position/posture information of the walking robot 10 that is estimated (recognized) in the prior update stage 'k-1, (610). The process as such is categorized as the prediction stage of the position recognition algorithm.

Next, the second pre-processing unit 220 obtains the image information of the surroundings of the moving space from the camera 120 (620).

Then, the second pre-processing unit 220 extracts a visual feature point from the image information obtained in the prior state 'k-1' and the image information obtained in the present state 'k', and performs a matching on the extracted features (630).

Next, the second pre-processing unit 220, in the similar manner as the odometry filter 310, calculates the relative posture change information of the walking robot 10 from the correlation obtained from the extracting and the matching of the feature points (640). The calculated relative posture change information of the walking robot 10 is the measured information z(k), which is previously described.

The predicted estimate information h(k) at the visual sensor based filter 320 may be expressed in Equation 5 below.

[Equation 5]

$$\mathbf{h}^{vo}(k) = h_1(r(k|k-1), q(k|k-1), r(k-1|k-1), q(k-1|k-1))$$

Thus, the update unit 324 enters the calculated relative posture change information of the walking robot 10 as the z(k) of Equation 2, which is previously described, calculates a Jacobian matrix of Equation 5, and enters the calculated result as the H(k) of Equation 2 and Equation 3, thereby updating the position/posture information of the walking robot 10 that is predicted in the prediction stage (650). The process as such is categorized as the update stage of the position recognition algorithm. The update unit 324 transmits the updated position/posture information of the walking robot 10 to the assimilation unit 326.

Then, the assimilation unit 326 determines whether the result of the position recognition (the updated position/posture information) of the walking robot 10 has been received from the update unit 356 of the fusion filter 350 (660). When the result of the position recognition of the walking robot 10 is entered from the update unit 356 of the fusion filter 350 ('Yes' at operation 660), the assimilation unit 326 reflects the result of the position recognition of the fusion filter 350 into the position/posture information of the walking robot 10 that is updated in the update stage, and transmits the position/posture information of the walking robot 10, which is provided with the result of the position recognition of the fusion filter 350 updated thereinto, to the prediction unit 322 (670). The process as such is categorized as the assimilation stage of the position recognition algorithm.

Meanwhile, when the result of the position recognition of the walking robot 10 is not entered from the update unit 356 of the fusion filter 350 ('No' at operation 660), the assimilation unit 326 proceeds to operation 680 without performing the assimilation stage.

Next, the control unit 200 determines whether the moving of the walking robot 10 is stopped (680). The control unit 200 determines that the moving of the walking robot 10 is stopped if a Stop Walking Command' of the walking robot 10 is entered through an input unit (not shown) by a user, or if no further rotating angle information is received from the encoder 110.

If the moving of the walking robot 10 is not stopped ('No' at operation 680), the control unit 200 returns to the operation 610, and continuously controls the walking robot 10 to perform the position recognition. If the moving of the walking robot 10 is stopped ('Yes' at operation 680), the control unit 200 completes the position recognition process of the walking robot 10.

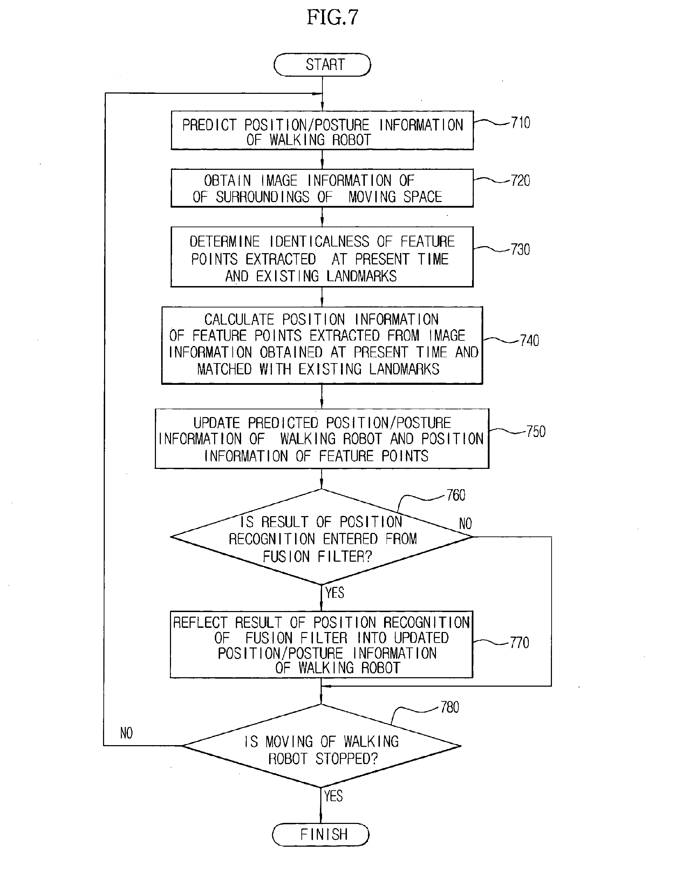

FIG. 7 is a flow chart illustrating a position recognition method of the walking robot 10 by using the third local filter 330 illustrated on FIG. 4.

The third local filter 330 uses the camera 120 as the sensor configured to perform the position recognition of the walking robot 10, and simultaneously estimates the three-dimensional position information of feature points extracted from the image information and the three-dimensional position/posture information of the walking robot 10. Thus, different from other filters 310, 320, and 340, the third filter 330 further includes a state variable $y_i(k|k)$, which is related to the position of the feature point.

For the convenience of description, the third local filter 330 is defined as a visual sensor based SLAM filter. The visual sensor based SLAM filter is capable of estimating the position/posture information of the walking robot 10 on the world coordinate, but has a constraint that the calculation time is increased as the moving distance increases because the visual sensor based SLAM filter maintains the position information of the features as the state variables.

As illustrated on FIG. 7, the prediction unit 332 of the third local filter 330 is configured to predict the position/posture information of the next stage 'k' of the walking robot 10 from new position/posture information of the walking robot 10, which is obtained by reflecting the result of the position recognition of the fusion filter 350 into the position/posture information of the walking robot 10 that is estimated (recognized) in the prior update stage 'k-1'(710). The process as such is categorized as the prediction stage of the position recognition algorithm.

Next, the third pre-processing unit 320 obtains the image information of the surroundings of the space in which the walking robot moves from the camera 120 (720).

Then, the third pre-processing unit 320 determines whether the feature point extracted from the current image information is identical to the existing landmarks stored in the storage unit 400 (730). That is, the third pre-processing unit 330 determines, through the tracking and matching process of the feature points, whether the feature point extracted from the current image information corresponds to the existing landmark being used, or whether to register the extracted feature point as a new feature point. Next, the third pre-processing unit 320 calculates the position information of the feature point that is registered as the existing landmark, and the position information of the feature point that is extracted from the current image information and matched to the existing landmark (740). The calculated position information of the feature point matched to the existing landmark is the measured information z(k), which is previously described.

The predicted measurement information h(k) at the visual sensor based SLAM filter 330 may be expressed in Equation 6 below.

[Equation 6]

$$\mathbf{h}_i^{vs}(k) = h_2(\mathbf{r}(k|k-1), \mathbf{q}(k|k-1), \mathbf{y}_i(k|k-1))$$

Thus, the update unit 334 enters the calculated position information of the existing landmark and the matched feature point as the z(k) of Equation 2 which is previously described, calculates a Jacobian matrix of Equation 6, and then enters the calculated result as the H(k) of Equation 2 and Equation 3, thereby updating the position/posture information of the walking robot 10 that is predicted in the prediction stage while updating the position information of the feature point (750). The process as such is categorized as the update stage of the position recognition algorithm. The update unit 334 transmits the updated position/posture information of the walking robot 10 to the assimilation unit 336.

Then, the assimilation unit 336 determines whether the result of the position recognition (the updated position/posture information) of the walking robot 10 has been received from the update unit 356 of the fusion filter 350 (760). When the result of the position recognition of the walking robot 10 is entered from the update unit 356 of the fusion filter 350 ('Yes' operation 760), the assimilation unit 336 reflects the result of the position recognition of the fusion filter 350 into the position/posture information of the walking robot 10 that is updated in the update stage, and transmits the position/posture information of the walking robot 10, which is provided with the result of the position recognition of the fusion filter 350 reflected thereinto, to the prediction unit 332 (770). The process as such is categorized as the assimilation stage of the position recognition algorithm.

Meanwhile, when the result of the position recognition of the walking robot 10 is not entered from the update unit 356 of the fusion filter 350 ('No' at operation 760), the assimilation unit 336 proceeds to the operation 780 without performing the assimilation stage.

Next, the control unit 200 determines whether the moving of the walking robot 10 is stopped (780). The control unit 200 determines that the moving of the walking robot 10 is stopped if a Stop Walking Command' of the walking robot 10 is entered through an input unit (not shown) by a user, or if no further rotating angle information is received from the encoder 110.

If the moving of the walking robot 10 is not stopped ('No' at operation 780), the control unit 200 returns to the operation 710, and continuously controls the walking robot 10 to perform the position recognition. If the moving of the walking robot 10 is stopped ('Yes' at operation 780), the control unit 200 completes the position recognition process of the walking robot 10.

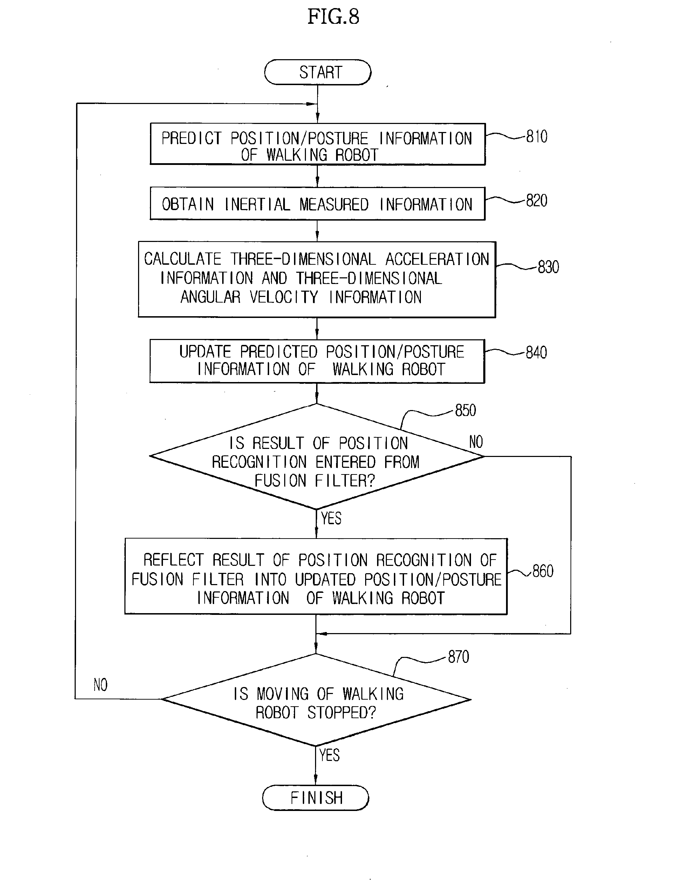

FIG. 8 is a flow chart illustrating a position recognition method of the walking robot 10 by using the fourth local filter 340 illustrated on FIG. 4.

The fourth local filter 420 uses the inertial sensor 130 as the sensor configured to perform the position recognition of the walking robot 10, and by using the three-dimensional acceleration information and the three-dimensional angular velocity information, updates the predicted position/posture information of the walking robot 10. For the convenience of description, the fourth local filter 420 is defined as the Inertial Measurement Unit (IMU).

As illustrated by FIG. 8, the prediction unit 342 of the fourth local filter 420 is configured to predict the position/posture information of the next stage 'k' of the walking robot 10 from new position/posture information of the walking robot 10, which is obtained by reflecting the result of the position recognition of the fusion filter 350 into the position/posture information of the walking robot 10 that is estimated (recognized) in the prior update stage 'k-1' (810). The process as such is categorized as the prediction stage of the position recognition algorithm.

Next, the fourth pre-processing unit 230 obtains measured inertial information from the inertial sensor 130 (820).

Then, the fourth pre-processing unit 230 calculates three-dimensional acceleration information and three-dimensional angular velocity information from acceleration information and angular velocity information detected through the inertial sensor 130 (830). The calculated three-dimensional acceleration information and three-dimensional angular velocity information are the measured information z(k), which is previously described.

The predicted measurement information h(k) at the Inertial Measurement Unit (IMU) filter 340 may be expressed in Equation 7 below.

[Equation 7]

$$\mathbf{h}^{imu}(k) = h_4(\mathbf{q}(k|k-1), \omega(k|k-1))$$

Thus, the update unit 344 enters the calculated three-dimensional acceleration information and the three-dimensional angular velocity information as the z(k) of Equation 2, which is previously described, calculates a Jacobian matrix of Equation 7, and then enters the calculated result to the H(k) of Equation 2 and Equation 3, thereby updating the position/posture information of the walking robot 10 that is predicted in the prediction stage (840). The process as such is categorized as the update stage of the position recognition algorithm. The update unit 344 transmits the updated position/posture information of the walking robot 10 to the assimilation unit 346. Then, the assimilation unit 346 determines whether the result of the position recognition (the updated position/posture information) of the walking robot 10 has been received from the update unit 356 of the fusion filter 350 (850). When the result of the position recognition of the walking robot 10 is entered from the update unit 356 of the fusion filter 350 ('Yes' at operation 850), the assimilation unit 346 reflects the result of the position recognition of the fusion filter 350 into the position/posture information of the walking robot 10 that is updated in the update stage, and transmits the position/posture information of the walking robot 10, which is provided with the result of the position recognition of the fusion filter 350 reflected thereinto, to the prediction unit 342 (860). The process as such is categorized as the assimilation stage of the position recognition algorithm.

Meanwhile, when the result of the position recognition of the walking robot 10 is not entered from the update unit 356 of the fusion filter 350 ('No' at operation 850), the assimilation unit 346 proceeds to the operation 870 without performing the assimilation stage.

Next, the control unit 200 determines whether the moving of the walking robot 10 is stopped (870). The control unit 200 determines that the moving of the walking robot 10 is stopped if a 'Stop Walking Command' of the walking robot 10 is entered through an input unit (not shown) by a user, or if no further of rotating angle information is received from the encoder 110.

If the moving of the walking robot 10 is not stopped ('No' at operation 870), the control unit 200 returns to the movement 810, and continuously controls the walking robot 10 to perform the position recognition. If the moving of the walking robot 10 is stopped ('Yes' at operation 870), the control unit 200 completes the position recognition process of the walking robot 10.

Hereinafter, referring to FIG. 4 again, the operation of the fusion filter 350 will be described.

The basic operation principle of the fusion filter 350 is similar to that of the local filters 310 to 340. However, the fusion filter 350 uses an information filter as an operation filter, the information filter forming a dual type in cooperation with Kalman filter that is used as the operating filter for each of the local filters 310, 320, 330, and 340. The information filter, in order to estimate the position and the posture of the walking robot 10, is provided with an information state vector yG(k|k) and an information matrix $Y_G(k|k)$ as the state variables, as expressed in Equation 8 and Equation 9 below.

[Equation 8]

$$\mathbf{y}_G(k|k) = \mathbf{P}_G^{-1}(k|k)\mathbf{x}_G(k|k)$$

[Equation 9]

$$\mathbf{Y}_G(k|k) = \mathbf{P}_G^{-1}(k|k)$$

The information filter is used as the operating filter of the fusion filter 350, so that the information filter is capable of performing a fusion of the result of the position recognition (the updated position/posture information) of the walking robot, which is transmitted from each of the local filters 310, 320, 330 and 340 at the assimilation stage of the fusion filter 350, in the form of an addition, as shown in Equation 10 and the Equation 11.

[Equation 10]

$$\mathbf{y}_G(k|k) = \mathbf{y}_G(k|k-1) + \sum_{i=1}^{N} \mathbf{i}_i(k)$$

[Equation 11]

$$\mathbf{Y}_G(k|k) = \mathbf{Y}_G(k|k-1) + \sum_{i=1}^{N} \mathbf{I}_i(k)$$

The result of the position recognition of the fusion filter 350 that is updated by using the position/posture information of the walking robot 10 that is integrated in the assimilation stage is again delivered to each of the local filters 310, 320, 330, and 340. Thus, the consistency of the estimation of the position recognition of the overall distributed filter system 300 is maintained.

The configuration of the distributed filter system 300 may be such that in a case when a problem occurs at the local filters 310, 320, 330, and 340, the system may shut off information from being delivered to the fusion filter 350, and continue the position recognition again after resolving the problem at the corresponding local filters 310, 320, 330, and 340, thereby enhancing the robustness of the overall position recognition system.

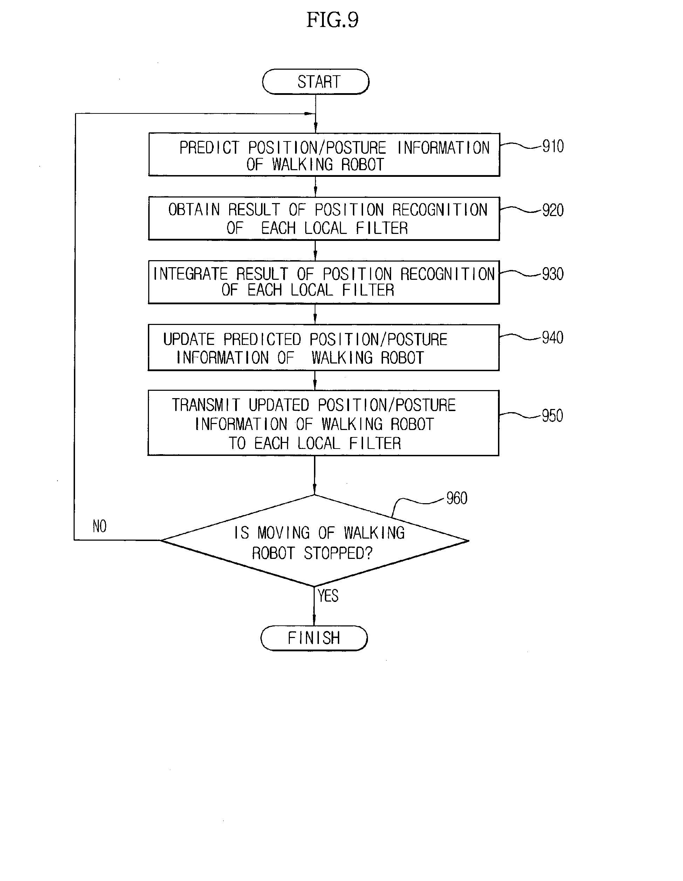

FIG. 9 is a flow chart illustrating a position recognition method of the walking robot 10 by using the fusion filter 350 illustrated on FIG. 4.

As illustrated on FIG. 9, the prediction unit 352 of the fusion filter 350 is configured to predict the position/posture information of the next stage 'k' of the walking robot 10 from the position/posture information of the walking robot 10 estimated (recognized) at the prior update stage 'k-1' (910). The process as such is categorized as the prediction stage of the position recognition algorithm.

Next, the assimilation unit 356354 obtains the result of the position recognition (the updated position/posture information) of the walking robot 10 from each of the local filters 310, 320, 330, and 340 (920).

Then, the assimilation unit 356354 integrates the result of the position recognition of each of the local filters 310, 320, 330, and 340 (930).

Next, the update unit 356 updates the position/posture information of the walking robot 10, which is predicted in the prediction stage, by using the integrated result of the position recognition (940). The process as such is categorized as the update stage of the position recognition algorithm. The update unit 356 transmits the updated position/posture information of the walking robot 10 to each of the assimilation units 316, 326, 336, and 346 of each of the local filters 310, 320, 330, and 340 (950).

Next, the control unit 200 determines whether the moving of the walking robot 10 is stopped (960). The control unit 200 determines that the moving of the walking robot 10 is stopped if a 'Stop Walking Command' of the walking robot 10 is entered through an input unit (not shown) by a user, or if no further of rotating angle information is received from the encoder 110.

If the moving of the walking robot 10 is not stopped ('No' at operation 960), the control unit 200 returns to operation 910, and continuously controls the walking robot 10 to perform the position recognition. If the moving of the walking robot 10 is stopped ('Yes' at operation 960), the control unit 200 completes the position recognition process of the walking robot 10.

Referring to FIGS. 1 to 9 above, among various mobile apparatuses, the walking robot 10 is used as an example to describe the case when the movement in the position recognition of a walking robot is performed by using a distributed filter system.

However, the present disclosure is not limited thereto. The position recognition may be applied to other mobile devices (such as a mobile phone, for example), which is not provided with an autonomous mobile function, but may be carried and controlled by a human being while moving, by using the distributed filter system as suggested in the present disclosure.

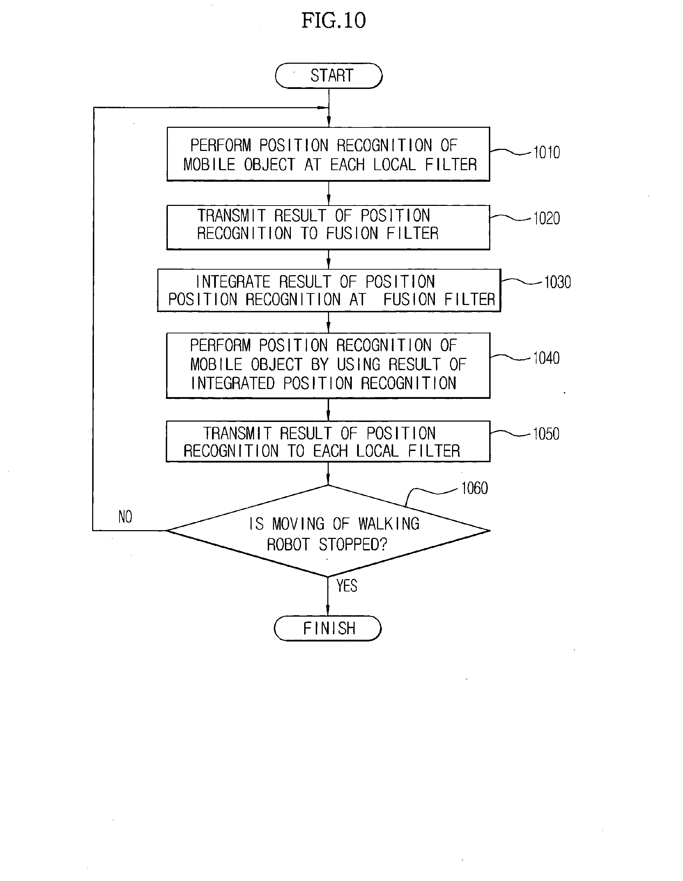

In addition, using an encoder, a camera, and an inertial sensor (a total of three sensors) is described above as an example of sensors used to perform the position recognition of a mobile apparatus, but rather than the above sensors, any sensor or apparatus, such as a distance sensor, a compass sensor, or a Global Positioning System (GPS), for example, may be used in performing the position recognition of a mobile apparatus. FIG. 10 is a flow chart illustrating a position recognition method of the walking robot 10 in accordance with an embodiment of the present disclosure.

Hereinafter, referring to FIG. 10, the method of position recognition of a mobile apparatus in accordance with an embodiment of the present disclosure will be described.

First, the position recognition of a mobile apparatus is performed at each of the local filters (1010).

Then, each of the local filters transmits the result of the position recognition to the fusion filter (1020).

Next, the fusion filter integrates the result of the position recognition transmitted from each of the local filters (1030).

After then, the fusion filter, by using the integrated result of the position recognition, performs the position recognition of the mobile apparatus (1040).

Next, the fusion filter transmits the result of the position recognition to each of the local filters (1050).

After then, a determination is made whether the moving of the mobile apparatus is stopped (1060). If the moving of the mobile apparatus is not stopped ('No' at operation 1060), the movement of position recognition of the mobile apparatus is continuously performed by returning to the operation 1010.

Meanwhile, if the moving of the mobile apparatus is stopped ('Yes' at operation 1060), the position recognition process of the mobile apparatus is finished.

As discussed above, embodiments provide a mobile apparatus, comprising a plurality of sensors; a plurality of local filters, each configured to receive detection information from at least one of the plurality of sensors to perform position recognition of the mobile apparatus; and a fusion filter configured to integrate the position recognition result of the plurality of local filters and to perform position recognition of the mobile apparatus by using the integrated position recognition result.

In some embodiments, each of the plurality of local filters and the fusion filter is independently operated.

In some embodiments, each of the plurality of local filters comprises: a prediction unit configured to predict position information and posture information of the mobile apparatus; an update unit configured to update the predicted position information and the predicted posture information of the mobile apparatus by using the detection information received from the at least one of the plurality of sensors; and an assimilation unit configured to integrate the updated position information and the updated posture information of the mobile apparatus with the position recognition result of the fusion filter.

In some embodiments, the fusion filter comprises: a prediction unit configured to predict position information and posture information of the mobile apparatus; an assimilation unit configured to integrate the predicted position information and the predicted posture information of mobile apparatus with the position recognition result of the plurality of local filters; and an update unit configured to update the predicted position information and the predicted posture information of the mobile apparatus by using the integrated position recognition result. In some embodiments, the update unit provided at each of the plurality of local filters is arranged to transmit the updated position information and the updated posture information of the mobile apparatus to the assimilation unit provided at the fusion filter. In some embodiments, the update unit provided at the fusion filter is arranged to transmit the updated position information and the updated posture information of the mobile apparatus to the assimilation unit provided at each of the plurality of local filters.

In some embodiments, the mobile apparatus forms part of a walking robot. Hence, in such embodiments, the plurality of local filters are each configured to perform position recognition of the walking robot; and the fusion filter is configured to perform position recognition of the walking robot by using the integrated position recognition result.

In some such embodiments, the plurality of sensors comprises: an encoder configured to obtain rotating angle information of a rotating joint that is related to a walking of the walking robot; a camera configured to obtain image information of surroundings of a space on which the walking robot walks; and an inertia sensor configured to obtain inertia measurement information of the walking robot.

In some embodiments, the plurality of local filters comprises: a first local filter configured to calculate odometry information by using the rotating angle information detected through the encoder and mechanism information of each link that forms the walking robot, and to perform the position recognition of the walking robot by using the odometry information; a second local filter configured to perform the position recognition of the walking robot by using relative posture change information of the walking robot, which is calculated by using the image information detected through the camera; a third local filter configured to perform the position recognition and a map building of the walking robot by using the image information detected through the camera; and a fourth local filter configured to perform the position recognition of the walking robot by using the inertia measurement information detected through the inertia sensor. In some such embodiments, the odometry information corresponds to position information and posture information of the walking robot on an origin point coordinate system of the moving space.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.

Although a few embodiments of the present disclosure have been shown and described, it would be appreciated by those skilled in the art that changes may be made in these embodiments without departing from the principles of the disclosure, the scope of which is defined in the claims and their equivalents.

## Claims

1. A walking robot (10), comprising:

   a plurality of sensors (110, 120, 130);
   a plurality of local filters (310, 320, 330, 340), each configured to receive detection information from at least one of the plurality of sensors to perform position recognition of the walking robot; and
   a fusion filter (350) configured to integrate the position recognition result of the plurality of local filters and to perform position recognition of the walking robot by using the integrated position recognition result, wherein each of the plurality of local filters comprises:

   a prediction unit (312, 322, 332, 342) configured to predict position information and posture information of the walking robot;
   an update unit (314, 324, 334, 344) configured to update the predicted position information and the predicted posture information of the walking robot by using the detection information received from the at least one of the plurality of sensors; and

an assimilation unit (316, 326, 336, 346) configured to integrate the updated position information and the updated posture information of the walking robot with the position recognition result of the fusion filter.

2. The walking robot (10) of claim 1, wherein each of the plurality of local filters (310, 320, 330, 340) and the fusion filter (350) is independently operated.

3. The walking robot (10) of claim 1 or claim 2, wherein the fusion filter (350) comprises:

a prediction unit (352) configured to predict position information and posture information of the walking robot; an assimilation unit (354) configured to integrate the predicted position information and the predicted posture information of walking robot with the position recognition result of the plurality of local filters; and an update unit (356) configured to update the predicted position information and the predicted posture information of the walking robot by using the integrated position recognition result.

4. The walking robot (10) of claim 3, wherein the update unit (314,324,334, 344) provided at each of the plurality of local filters (310, 320, 330, 340) is arranged to transmit the updated position information and the updated posture information of the walking robot to the assimilation unit (354) provided at the fusion filter (350).

5. The walking robot (10) of claim 4, wherein the update unit (356) provided at the fusion filter (350) is arranged to transmit the updated position information and the updated posture information of the walking robot to the assimilation unit (316, 326, 336, 346) provided at each of the plurality of local filters (310, 320, 330, 340).

6. The walking robot (10) of any of the preceding claims, wherein the plurality of sensors (100) comprises:

an encoder (110) configured to obtain rotating angle information of a rotating joint that is related to a walking of the walking robot; a camera (120) configured to obtain image information of surroundings of a space on which the walking robot walks; and an inertia sensor (130) configured to obtain inertia measurement information of the walking robot.

7. The walking robot (10) of claim 6, wherein the plurality of local filters (310, 320, 330,340) comprises:

a first local filter (310) configured to calculate odometry information by using the rotating angle information detected through the encoder (110) and mechanism information of each link that forms the walking robot, and to perform the position recognition of the walking robot by using the odometry information; a second local filter (320) configured to perform the position recognition of the walking robot by using relative posture change information of the walking robot, which is calculated by using the image information detected through the camera (120); a third local filter (330) configured to perform the position recognition and a map building of the walking robot by using the image information detected through the camera; and a fourth local filter (340) configured to perform the position recognition of the walking robot by using the inertia measurement information detected through the inertia sensor (130).

8. The walking robot (10) of claim 7, wherein the odometry information corresponds to position information and posture information of the walking robot on an origin point coordinate system of the moving space.


**Patentansprüche**

1. Gehroboter (10), der Folgendes umfasst:

eine Vielzahl von Sensoren (110, 120, 130); eine Vielzahl von lokalen Filtern (310, 320, 330, 340), die jeweils dazu konfiguriert sind, Erfassungsinformationen von mindestens einem der Vielzahl von Sensoren zu empfangen um eine Positionserkennung des Gehroboters auszuführen; und einen Fusionsfilter (350), der dazu konfiguriert ist, das Positionserkennungsergebnis der Vielzahl von lokalen Filtern zu integrieren und eine Positionserkennung des Gehroboters unter Verwendung des integrierten Positionserkennungsergebnisses auszuführen, wobei jeder der Vielzahl von lokalen Filtern Folgendes umfasst:

eine Vorhersageeinheit (312, 322, 332, 342), die dazu konfiguriert ist, Positionsinformationen und Haltungsinformationen des Gehroboters vorherzusagen;

eine Aktualisierungseinheit (314, 324, 334, 344), die dazu konfiguriert ist, die vorhergesagten Positionsinformationen und die vorhergesagten Haltungsinformationen des Gehroboters unter Verwendung der von dem mindestens einen der Vielzahl von Sensoren empfangenen Erfassungsinformationen zu aktualisieren; und

eine Angleichungseinheit (316, 326, 336, 346), die dazu konfiguriert ist, die aktualisierten Positionsinformationen und die aktualisierten Haltungsinformationen des Gehroboters mit dem Positionserkennungsergebnis des Fusionsfilters zu integrieren.

2. Gehroboter (10) nach Anspruch 1, wobei jeder der Vielzahl von lokalen Filtern (310, 320, 330, 340) und der Fusionsfilter (350) unabhängig betrieben wird.

3. Gehroboter (10) nach Anspruch 1 oder Anspruch 2, wobei der Fusionsfilter (350) Folgendes umfasst:

eine Vorhersageeinheit (352), die dazu konfiguriert ist, Positionsinformationen und Haltungsinformationen des Gehroboters vorherzusagen;

eine Angleichungseinheit (354), die dazu konfiguriert ist, die vorhergesagten Positionsinformationen und die vorhergesagten Haltungsinformationen des Gehroboters mit dem Positionserkennungsergebnis der Vielzahl von lokalen Filtern zu integrieren; und

eine Aktualisierungseinheit (356), die dazu konfiguriert ist, die vorhergesagten Positionsinformationen und die vorhergesagten Haltungsinformationen des Gehroboters unter Verwendung des integrierten Positionserkennungsergebnisses zu aktualisieren.

4. Gehroboter (10) nach Anspruch 3, wobei die an jedem der Vielzahl von lokalen Filtern (310, 320, 330, 340) vorgesehene Aktualisierungseinheit (314, 324, 334, 344) dazu angeordnet ist, die aktualisierten Positionsinformationen und die aktualisierten Haltungsinformationen des Gehroboters an die an dem Fusionsfilter (350) vorgesehene Angleichungseinheit (354) zu übertragen.

5. Gehroboter (10) nach Anspruch 4, wobei die an dem Fusionsfilter (350) vorgesehene Aktualisierungseinheit (356) dazu angeordnet ist, die aktualisierten Positionsinformationen und die aktualisierten Haltungsinformationen des Gehroboters an die an jedem der Vielzahl von lokalen Filtern (310, 320, 330, 340) vorgesehene Angleichungseinheit (316, 326, 336, 346) zu übertragen.

6. Gehroboter (10) nach einem der vorangehenden Ansprüche, wobei die Vielzahl von Sensoren (100) Folgendes umfasst:

einen Kodierer (110), der dazu konfiguriert ist, Drehwinkelinformationen eines mit einem Gehen des Gehroboters zusammenhängenden Drehgelenks zu beschaffen;

eine Kamera (120), die dazu konfiguriert ist, Bildinformationen der Umgebung eines Raums zu beschaffen, auf dem der Gehroboter geht; und einen Trägheitssensor (130), der dazu konfiguriert ist, Trägheitsmessungsinformationen des Gehroboters zu beschaffen.

7. Gehroboter (10) nach Anspruch 6, wobei die Vielzahl von lokalen Filtern (310, 320, 330, 340) Folgendes umfasst:

einen ersten lokalen Filter (310), der dazu konfiguriert ist, Odometrieinformationen unter Verwendung der durch den Kodierer (110) erfassten Drehwinkelinformationen und von Mechanismusinformationen jedes den Gehroboter bildenden Glieds zu berechnen und die Positionserkennung des Gehroboters unter Verwendung der Odometrieinformationen auszuführen;

einen zweiten lokalen Filter (320), der dazu konfiguriert ist, die Positionserkennung des Gehroboters unter Verwendung von Informationen zur relativen Haltungsänderung des Gehroboters auszuführen, die unter Verwendung der durch die Kamera (120) erfassten Bildinformationen berechnet werden;

einen dritten lokalen Filter (330), der dazu konfiguriert ist, die Positionserkennung und eine Kartenerstellung des Gehroboters unter Verwendung der durch die Kamera erfassten Bildinformationen auszuführen; und

einen vierten lokalen Filter (340), der dazu konfiguriert ist, eine Positionserkennung des Gehroboters unter Verwendung der durch den Trägheitssensor (130) erfassten Trägheitsmessungsinformationen auszuführen.

8. Gehroboter (10) nach Anspruch 7, wobei die Odometrieinformationen Positionsinformationen und Haltungsinformationen des Gehroboters an einem Ursprungspunkt-Koordinatensystem des Bewegungsraums entsprechen.

**Revendications**

1. Robot locomoteur (10), comprenant :

   une pluralité de capteurs (110, 120, 130) ;
   une pluralité de filtres locaux (310, 320, 330, 340), chacun étant configuré de façon à recevoir des informations de détection en provenance d'au moins un capteur, parmi la pluralité de capteurs, afin de réaliser la reconnaissance de position du robot locomoteur ; et
   un filtre de fusion (350) configuré de façon à intégrer le résultat de la reconnaissance de position de la pluralité de filtres locaux, et à réaliser la reconnaissance de position du robot locomoteur grâce à l'utilisation du résultat intégré de la reconnaissance de position, cas dans lequel chaque filtre, parmi la pluralité de filtres locaux, comprend :

      une unité de prévision (312, 322, 332, 342) configurée de façon à prédire des informations de position et des informations de posture du robot locomoteur ;
      une unité de mise à jour (314, 324, 334, 344) configurée de façon à mettre à jour les informations de position prédites et les informations de posture prédites du robot locomoteur grâce à l'utilisation des informations de détection reçues en provenance dudit au moins un capteur, parmi la pluralité de capteurs ; et
      une unité d'assimilation (316, 326, 336, 346) configurée de façon à intégrer les informations de position mises à jour et les informations de posture mises à jour du robot locomoteur avec le résultat de la reconnaissance de position du filtre de fusion.

2. Robot locomoteur (10) selon la revendication 1, chaque filtre parmi la pluralité de filtres locaux (310, 320, 330, 340) et le filtre de fusion (350) étant opéré de façon indépendante.

3. Robot locomoteur (10) selon la revendication 1 ou la revendication 2, le filtre de fusion (350) comprenant :

   une unité de prévision (352) configurée de façon à prédire des informations de position et des informations de posture du robot locomoteur ;
   une unité d'assimilation (354) configurée de façon à intégrer les informations de position prédites et les informations de posture prédites du robot locomoteur avec le résultat de la reconnaissance de position de la pluralité de filtres locaux ; et
   une unité de mise à jour (356) configurée de façon à mettre à jour les informations de position prédites et les informations de posture prédites du robot locomoteur grâce à l'utilisation du résultat intégré de la reconnaissance de position.

4. Robot locomoteur (10) selon la revendication 3, l'unité de mise à jour (314, 324, 334, 344) prévue au niveau de chaque filtre parmi la pluralité de filtres locaux (310, 320, 330, 340) étant agencée de façon à transmettre les informations de position mises à jour et les informations de posture mises à jour du robot locomoteur vers l'unité d'assimilation (354) prévue au niveau du filtre de fusion (350).

5. Robot locomoteur (10) selon la revendication 4, l'unité de mise à jour (356) prévue au niveau du filtre de fusion (350) étant agencée de façon à transmettre les informations de position mises à jour et les informations de posture mises à jour du robot locomoteur vers l'unité d'assimilation (316, 326, 336, 346) prévue au niveau de chaque filtre parmi la pluralité de filtres locaux (310, 320, 330, 340).

6. Robot locomoteur (10) selon l'une quelconque des revendications précédentes, la pluralité de capteurs (100) comprenant :

   un codeur (110) configuré de façon à obtenir des informations d'angle de rotation pour une articulation de rotation qui est liée à une locomotion du robot locomoteur ;
   une caméra (120) configurée de façon à obtenir des informations d'image relatives au voisinage d'un espace sur lequel marche le robot locomoteur ; et
   un capteur d'inertie (130) configuré de façon à obtenir des informations de mesure d'inertie du robot locomoteur.

**7.** Robot locomoteur (10) selon la revendication 6, la pluralité de filtres locaux (310, 320, 330, 340), comprenant :

un premier filtre local (310) configuré de façon à calculer des informations odométriques grâce à l'utilisation des informations d'angle de rotation détectées par l'intermédiaire du codeur (110) et des informations de mécanisme pour chaque liaison qui forme le robot locomoteur, et à réaliser la reconnaissance de position du robot locomoteur grâce à l'utilisation des informations odométriques ;
un deuxième filtre local (320) configuré de façon à réaliser la reconnaissance de position du robot locomoteur grâce à l'utilisation des informations de changement relatif de posture du robot locomoteur, qui est calculée grâce à l'utilisation des informations d'image détectées par l'intermédiaire de la caméra (120) ;
un troisième filtre local (330) configuré de façon à réaliser la reconnaissance de position et une élaboration de carte pour le robot locomoteur grâce à l'utilisation des informations d'image détectées par l'intermédiaire de la caméra ; et
un quatrième filtre local (340) configuré de façon à réaliser la reconnaissance de position du robot locomoteur grâce à l'utilisation des informations de mesure d'inertie détectées par l'intermédiaire du capteur d'inertie (130).

**8.** Robot locomoteur (10) selon la revendication 7, les informations odométriques correspondant à des informations de position et des informations de posture du robot locomoteur sur un système de coordonnées à point d'origine de l'espace de mobilité.

# FIG. 1

# FIG.2

## FIG.3

100

110 — ENCODER

120 — CAMERA

130 — INERTIA SENSOR

200

FIRST PRE-PROCESSING UNIT
210

SECOND PRE-PROCESSING UNIT
220

THIRD PRE-PROCESSING UNIT
230

FOURTH PRE-PROCESSING UNIT
240

POSITION RECOGNITION UNIT
300

450

DRIVING UNIT

STORAGE UNIT
400

# FIG.4

## FIG.5

START

PREDICT POSITION/POSTURE
INFORMATION OF WALKING ROBOT — 510

OBTAIN ROTATING ANGLE INFORMATION
OF EACH JOINT UNIT — 520

CALCULATE ODOMETRY INFORMATION — 530

CALCULATE RELATIVE POSTURE CHANGE
INFORMATION OF WALKING ROBOT — 540

UPDATE PREDICTED POSITION/POSTURE
INFORMATION OF WALKING ROBOT — 550

IS RESULT OF POSITION
RECOGNITION ENTERED FROM
FUSION FILTER? — 560
NO

YES

REFLECT RESULT OF POSITION RECOGNITION
OF FUSION FILTER INTO UPDATED
POSITION/POSTURE INFORMATION — 570

IS MOVING OF
OF WALKING ROBOT STOPPED? — 580
NO

YES

FINISH

# FIG.6

```
                    ┌─────────────┐
                    │    START    │
                    └─────────────┘
                           │
    ┌──────────────────────┼──────────────────────────┐
    │         ┌─────────────────────────────────────┐  │
    │         │ PREDICT POSITION/POSTURE INFORMATION │──┼── 610
    │         │         OF WALKING ROBOT             │  │
    │         └─────────────────────────────────────┘  │
    │                       │                           │
    │         ┌─────────────────────────────────────┐  │
    │         │    OBTAIN IMAGE INFORMATION OF       │──┼── 620
    │         │   SURROUNDINGS OF MOVING SPACE       │  │
    │         └─────────────────────────────────────┘  │
```

IS RESULT OF POSITION RECOGNITION ENTERED FROM FUSION FILTER? — 660    NO

YES

REFLECT RESULT OF POSITION RECOGNITION OF FUSION FILTER INTO UPDATED POSITION/POSTURE INFORMATION OF WALKING ROBOT — 670

PREDICT POSITION/POSTURE INFORMATION OF WALKING ROBOT — 610

OBTAIN IMAGE INFORMATION OF SURROUNDINGS OF MOVING SPACE — 620

EXTRACT AND MATCH FEATURES — 630

CALCULATE RELATIVE POSTURE CHANGE INFORMATION OF WALKING ROBOT — 640

UPDATE PREDICTED POSITION/POSTURE INFORMATION OF WALKING ROBOT — 650

NO    IS MOVING OF WALKING ROBOT STOPPED? — 680

YES

FINISH

# FIG.7

```
                    ( START )
                         │
        ┌────────────────┤
        │                ▼
        │   ┌──────────────────────────────────┐
        │   │ PREDICT POSITION/POSTURE INFORMATION │──710
        │   │        OF WALKING ROBOT            │
        │   └──────────────────────────────────┘
        │                ▼
        │   ┌──────────────────────────────────┐
        │   │      OBTAIN IMAGE INFORMATION OF    │──720
        │   │   OF SURROUNDINGS OF  MOVING SPACE │
        │   └──────────────────────────────────┘
        │                ▼
        │   ┌──────────────────────────────────┐
        │   │  DETERMINE IDENTICALNESS OF FEATURE │──730
        │   │   POINTS EXTRACTED  AT PRESENT TIME │
        │   │      AND EXISTING LANDMARKS         │
        │   └──────────────────────────────────┘
        │                ▼
        │   ┌──────────────────────────────────┐
        │   │     CALCULATE POSITION INFORMATION  │
        │   │ OF FEATURE POINTS EXTRACTED FROM IMAGE │──740
        │   │ INFORMATION OBTAINED AT PRESENT TIME AND│
        │   │    MATCHED WITH EXISTING LANDMARKS  │
        │   └──────────────────────────────────┘
        │                ▼
        │   ┌──────────────────────────────────┐
        │   │    UPDATE PREDICTED POSITION/POSTURE │
        │   │ INFORMATION OF  WALKING ROBOT AND POSITION │──750
        │   │    INFORMATION OF FEATURE POINTS    │
        │   └──────────────────────────────────┘
        │                ▼
        │            ◇ IS RESULT OF POSITION ◇        NO
        │            ◇ RECOGNITION ENTERED FROM ◇─────┐  ──760
        │            ◇    FUSION FILTER?     ◇        │
        │                   │ YES                     │
        │   ┌──────────────────────────────────┐      │
        │   │ REFLECT RESULT OF POSITION RECOGNITION │     │
        │   │   OF  FUSION FILTER INTO UPDATED   │──770 │
        │   │    POSITION/POSTURE INFORMATION    │      │
        │   │        OF WALKING ROBOT            │      │
        │   └──────────────────────────────────┘      │
        │                ▼◄──────────────────────────┘
        │   NO        ◇ IS MOVING OF WALKING ◇   ──780
        └────────────◇    ROBOT STOPPED?     ◇
                          │ YES
                    ( FINISH )
```

## FIG.8

```
                         START

              PREDICT POSITION/POSTURE INFORMATION        810
                     OF WALKING ROBOT

              OBTAIN INERTIAL MEASURED INFORMATION        820

              CALCULATE THREE-DIMENSIONAL ACCELERATION
               INFORMATION AND THREE-DIMENSIONAL          830
                  ANGULAR VELOCITY INFORMATION

              UPDATE PREDICTED POSITION/POSTURE           840
                 INFORMATION OF  WALKING ROBOT

                                                          850
                     IS RESULT OF POSITION        NO
                  RECOGNITION ENTERED FROM
                        FUSION FILTER?

                            YES

              REFLECT RESULT OF POSITION RECOGNITION OF
              FUSION FILTER INTO UPDATED POSITION/POSTURE  860
                 INFORMATION  OF WALKING ROBOT

                                                          870
          NO          IS MOVING OF WALKING
                        ROBOT STOPPED?

                           YES

                         FINISH
```

## FIG.9

```
              ┌───────────┐
              │   START   │
              └───────────┘
                    │
                    ▼
    ┌──────────────────────────────────────┐
    │ PREDICT POSITION/POSTURE INFORMATION  │─── 910
    │         OF WALKING ROBOT              │
    └──────────────────────────────────────┘
                    │
                    ▼
    ┌──────────────────────────────────────┐
    │ OBTAIN RESULT OF POSITION RECOGNITION │─── 920
    │         OF EACH LOCAL FILTER          │
    └──────────────────────────────────────┘
                    │
                    ▼
    ┌──────────────────────────────────────┐
    │ INTEGRATE RESULT OF POSITION RECOGNITION │─ 930
    │         OF EACH LOCAL FILTER          │
    └──────────────────────────────────────┘
                    │
                    ▼
    ┌──────────────────────────────────────┐
    │ UPDATE PREDICTED POSITION/POSTURE     │─── 940
    │   INFORMATION OF WALKING ROBOT        │
    └──────────────────────────────────────┘
                    │
                    ▼
    ┌──────────────────────────────────────┐
    │ TRANSMIT UPDATED POSITION/POSTURE     │
    │   INFORMATION OF WALKING ROBOT        │─── 950
    │       TO EACH LOCAL FILTER            │
    └──────────────────────────────────────┘
                    │
                    ▼
                  ╱────╲         960
          ╱───────────────────╲
    NO   ╱   IS MOVING OF WALKING ╲
    ◄────    ROBOT STOPPED?        
          ╲───────────────────╱
                  ╲────╱
                    │ YES
                    ▼
              ┌───────────┐
              │  FINISH   │
              └───────────┘
```

## FIG.10

START

PERFORM POSITION RECOGNITION OF
MOBILE OBJECT AT EACH LOCAL FILTER — 1010

TRANSMIT RESULT OF POSITION
RECOGNITION TO FUSION FILTER — 1020

INTEGRATE RESULT OF POSITION
POSITION RECOGNITION AT FUSION FILTER — 1030

PERFORM POSITION RECOGNITION OF
MOBILE OBJECT BY USING RESULT OF
INTEGRATED POSITION RECOGNITION — 1040

TRANSMIT RESULT OF POSITION
RECOGNITION TO EACH LOCAL FILTER — 1050

IS MOVING OF WALKING
ROBOT STOPPED? — 1060

NO

YES

FINISH

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1978432 A
- US 2006129276 A
- US 6047226 A